# DEMANDE DE BREVET EUROPEEN

(11) **EP 1 400 935 A1**
(43) Date de publication de la demande: **24.03.2004**
(21) Numéro de dépôt: 03291706.4
(22) Date de dépôt: 09.07.2003
(51) Int. Cl.: G07F 19/00

(54) **Système pour opérer un transfert d'informations, simplifié par l'utilisation d'une relation pré-établie et applications**

(30) Priorité: 15.07.2002 FR 0208922
(71) Demandeur: FRANCE TELECOM, 75015 Paris (FR)
(72) Inventeur: le Therisien, Philippe, 75116 Paris (FR); Bugault, Nicolas, 75015 Paris (FR)
(74) Mandataire: Bentz, Jean-Paul

(57) **Abrégé**

L'invention concerne un système pour opérer un transfert d'informations entre des première et seconde entités (K_SOUR, K_BNFC), au moyen d'une transmission sur un réseau de communication (COMM), depuis un terminal d'émission (EMT) vers un récepteur (RCP), d'une requête de transfert (RQ_TRSF) incluant une donnée d'origine (D_ORIG) identifiant la première entité (K_SOUR), une donnée de destination (D_DEST) identifiant la seconde entité (K_BNFC), et une donnée de valeur (D_VAL) identifiant un attribut du transfert.

Selon l'invention, la donnée d'origine (D_ORIG) comprend un code (C_PIN, C_CART) identifiant la première entité (K_SOUR) par l'intermédiaire d'une relation pré-établie (ABONN, PREPM) entre un opérateur du réseau et un expéditeur de la requête de transfert (RQ_TRSF).

## Description

L'invention concerne, de façon générale, à la fois le domaine des technologies d'informations et celui des télécommunications.

Plus précisément, l'invention concerne, selon un premier de ses aspects, un système pour opérer un transfert d'informations entre des première et seconde entités, ce système comprenant une transmission, depuis un terminal d'émission appartenant à un réseau de communication et vers un récepteur de ce même réseau de communication, d'une requête de transfert incluant au moins une donnée d'origine identifiant la première entité, une donnée de destination identifiant la seconde entité, et une donnée de valeur identifiant un attribut du transfert.

Bien que le système de l'invention puisse trouver application dans de nombreux domaines de la technique, les première et seconde entités précitées peuvent par exemple être respectivement constituées, entre autres, par un compte source à débiter et un compte bénéficiaire à créditer, le transfert d'informations constituant ainsi un transfert financier entre ces deux comptes, et la donnée de valeur identifiant le montant de ce transfert.

De nombreuses techniques sont aujourd'hui disponibles pour procéder à des transferts financiers.

Dans le domaine des télécommunications, on peut citer l'Internet, les cartes prépayées, les cartes bancaires, les paiements sécurisés sur un téléphone mobile, etc.

Ces techniques ont en commun le fait qu'elles ont l'ambition de permettre des transferts d'argent importants, de sorte qu'elles impliquent des procédures complexes de sécurité et / ou de validation.

Les systèmes connus sont donc relativement lents, coûteux et mettent en oeuvre des solutions disproportionnées pour les transferts de sommes modestes, surtout lorsque ces transferts sont effectués dans des conditions de risques totalement marginales.

Aussi les techniques existantes apparaissent-elles très mal adaptées, notamment, à l'utilisation d'un porte-monnaie électronique (PME), au rechargement de comptes téléphoniques, et au versement de dons pour les bonnes oeuvres.

La présente invention, qui se fonde sur ce constat, a pour but de proposer un système répondant au besoin, aujourd'hui non satisfait, de plus de souplesse et de simplicité dans le transfert d'informations.

A cette fin, le système de l'invention, par ailleurs conforme à la définition générique qu'en donne le préambule ci-dessus, est essentiellement caractérisé en ce que la donnée d'origine comprend un code identifiant la première entité par l'intermédiaire d'une relation pré-établie entre un opérateur du réseau et un expéditeur de la requête de transfert.

Concrètement, la nature de la relation pré-établie entre l'opérateur du réseau de communication et l'utilisateur présumé du terminal d'émission dépend généralement de la nature de l'application qui est faite du système de l'invention, cette relation pré-établie étant par exemple constituée par une transaction financière préalable, telle qu'un pré-paiement ou un abonnement, dans le cas où le système de l'invention est utilisé pour effectuer un transfert financier.

Le système est particulièrement bien adapté au cas où le réseau utilisé est un réseau de téléphonie numérique, et où la requête de transfert comprend au moins, en plus du code d'identification, une adresse, telle qu'un numéro de téléphone, composée par le terminal d'émission et identifiant le récepteur, et un message numérique libellé suivant un format prédéterminé et incluant au moins la donnée de valeur.

Pour ce qui concerne l'identification du réseau de communication, il convient de préciser que l'indication donnée antérieurement, selon laquelle le terminal d'émission et le récepteur appartiennent à un même réseau de communication, doit simplement être comprise comme indiquant que le récepteur est en mesure de recevoir la requête de transfert émise par le terminal d'émission.

Cette indication ne doit donc notamment pas être interprétée comme impliquant nécessairement que le support physique de la requête émise par le terminal d'émission reste le même tout au long de la transmission de cette requête jusqu'au récepteur, ou que l'opérateur du réseau de communication gérant la portion locale de réseau à laquelle appartient le récepteur soit le même que l'opérateur gérant la portion locale de réseau à laquelle appartient le terminal d'émission. En cas de pluralité d'opérateurs, la référence à "l'opérateur" du réseau doit être comprise comme collective.

En particulier, l'expression « réseau de communication» englobe donc une association de réseaux interconnectés incluant un réseau fixe à l'émission de la requête et un réseau mobile en réception.

Par ailleurs, l'expression "terminal d'émission" précise la fonction essentielle du dispositif ainsi dénommé et n'inclut aucune restriction implicite sur la capacité de ce dispositif à fonctionner à la réception, la même remarque valant bien sûr pour l'expression "récepteur".

Dans le cas où la requête de transfert comprend un message numérique, le code identifiant la première entité peut être inclus dans ce message.

Cependant, il est également possible de prévoir que le terminal d'émission soit identifié dans le réseau par un code d'identification qui lui est propre, que la première entité soit liée au code d'identification par ladite relation pré-établie, et que ce code d'identification soit traité par le réseau à la fois en tant qu'identifiant du terminal d'émission et en tant que donnée d'origine identifiant la première entité par l'intermédiaire de ladite relation pré-établie.

Dans un mode de réalisation avantageux de l'invention, le code identifiant la première entité est affecté d'un attribut de validité connu du réseau et dépendant de la relation pré-établie entre l'opérateur du réseau de communication et l'expéditeur de la requête de transfert, et cette requête est traitée par le réseau en fonction de l'attribut de validité de ce code.

Le réseau de communication utilisé pour la mise en oeuvre de l'invention est par exemple constitué par un réseau GSM, le message numérique étant alors de préférence constitué par un message court de service SMS, et la donnée de valeur étant avantageusement codée dans ce message sous forme de caractères alphabétiques pour réduire les risques d'erreur.

Comme le sait bien l'homme de métier, l'acronyme GSM dérive de l'expression anglo-saxonne "Global System for Mobile communications" et constitue l'appellation internationale d'un système de téléphonie radio cellulaire numérique répondant à la norme elle-même dite "GSM".

L'acronyme SMS dérive quant à lui de l'expression anglo-saxonne "Short Message Service" et désigne, dans la norme GSM, un service bidirectionnel de messages courts.

Néanmoins, la référence faite dans la présente description à un réseau GSM doit être considérée comme incluant la référence à un réseau UMTS, à un réseau GPRS, et à tout réseau téléphonique utilisant des postes permettant l'envoi de messages SMS.

De même, la référence faite dans la présente description à un message SMS doit être considérée comme incluant la référence à toute autre forme de message numérique, tel qu'un message MMS (abréviation de « Multimédia Message Service »), qui correspond à l'envoi d'un texte depuis un poste mobile sans recours au réseau Internet.

Dans une variante possible de mise en oeuvre du système de l'invention, l'adresse est traitée par le réseau à la fois en tant qu'identifiant du récepteur et en tant que donnée de destination.

Dans une autre variante possible, l'adresse est traitée par le réseau en tant qu'identifiant du récepteur, et le message numérique inclut lui-même la donnée de destination.

Dans le cas d'un réseau GSM, le récepteur de la requête de transfert au format SMS est typiquement constituée d'une chaîne de récepteurs successifs aboutissant à un récepteur final, cette chaîne de récepteurs successifs comprenant au moins un commutateur du réseau GSM, un serveur central de messages courts auquel la requête de transfert est transmise par ce commutateur, et un serveur externe spécialisé dans le traitement de transferts par messages courts SMS, vers lequel la requête de transfert est aiguillée par le serveur central de messages courts.

Dans ce cas, le serveur externe analyse le message numérique, déclenche des opérations liées au transfert et dépendant au moins du contenu du message numérique et du code d'identification, et commande l'émission, à destination du terminal d'émission, d'un message rendant au moins compte des opérations effectuées ou non effectuées.

Dans certaines applications, il peut être utile de prévoir que le serveur externe soumette le déclenchement des opérations liées au transfert à la réalisation d'au moins une condition supplémentaire transformant une promesse de transfert en un accord de transfert.

Dans le cas typique d'application du système à un réseau GSM, le code d'identification pourra par exemple être constitué par un code de type MSISDN, par un code de type IMEI, ou encore par un code d'identification "Bluetooth".

L'acronyme MSISDN dérive de l'expression anglo-saxonne " Mobile Station ISD Number" et désigne le numéro international d'un abonné au réseau GSM.

L'acronyme IMEI dérive de l'expression anglo-saxonne " International Mobile Equipment Identity" et désigne l'identité internationale spécifique d'un terminal.

Pour éviter la communication à des tiers et / ou la publication de données confidentielles ou privées, il peut être utile de prévoir que le code d'identification au moins subisse un transcodage par le réseau de communication, le transcodage pouvant porter si nécessaire sur l'intégralité du message.

Par ailleurs, pour renforcer la sécurité du système, le message numérique pourra inclure une signature électronique identifiant l'expéditeur et assurant l'intégrité de la requête de transfert.

Le système de l'invention est particulièrement bien adapté à l'envoi de dons à des associations caritatives et au rechargement du crédit d'un compte prépayé donnant par exemple accès au réseau de communication.

Pour autant que la possibilité soit donnée d'inclure une référence d'identification supplémentaire dans le message, le système de l'invention peut également permettre le règlement de factures.

Le système de l'invention présente de nombreux avantages, qui peuvent être mis en évidence sur une application à un transfert financier.

Tout d'abord ce système permet de supprimer certaines tâches matérielles qui, bien que génératrices de coûts, sont indispensables à la mise en oeuvre des transferts financiers actuels.

Dans le cas par exemple des envois d'argent aux associations caritatives, le coût que représente aujourd'hui, pour le donateur, l'approvisionnement d'une enveloppe, son transport (timbre), et le traitement du chèque transmettant le don, est réduit par le système de l'invention au coût de l'envoi d'un message SMS, beaucoup plus simple, plus rapide, et environ trois fois moins cher.

L'intérêt est le même pour l'association caritative, dans le cas où c'est elle qui fournit le timbre et l'enveloppe.

Le système de l'invention facilite également la réception des dons par l'association caritative, l'envoi de ses remerciements, et l'organisation de ses campagnes ultérieures de re-sensibilisation.

D'un point de vue écologique, la mise en oeuvre du système de l'invention permet une réduction sensible de l'usage du papier (enveloppes, factures, chèques, publicités, etc.).

De son côté, l'opérateur du réseau GSM peut, dans la mesure où tous les moyens sont déjà disponibles, assurer à faible coût une aide concrète pour un service civique et d'utilité publique.

Dans le cas de transferts d'argent entre comptes prépayés, le système de l'invention réduit les manipulations nécessaires, et offre notamment au terminal d'émission la possibilité de réapprovisionner un autre compte d'accès au réseau sans avoir à passer par un vendeur de cartes prépayées et sans débourser physiquement la moindre somme d'argent.

Le système de l'invention permet également d'améliorer le contrôle des transferts.

Pour ce qui concerne les dons par exemple, l'opérateur du réseau GSM pourra aisément fournir, avec les relevés périodiques ou factures qu'il adresse au terminal d'émission autorisé du réseau, des relevés fiscaux certifiant le paiement de dons à des associations caritatives reconnues.

Pour les transferts de compte à compte, le système de l'invention donne par exemple aux parents un moyen efficace de contrôler les dépenses téléphoniques de leurs enfants.

Le message peut inclure une référence d'identification supplémentaire, telle qu'un numéro de facture, auquel cas le système de l'invention peut permettre le règlement de factures de façon très aisée.

La sécurité du système peut par ailleurs être renforcée en prévoyant que le message inclue une signature électronique identifiant l'expéditeur de la requête de transfert .

De plus, l'absence de moyens physiques susceptibles d'être égarés ou détruits garantit une plus grande sécurité des transferts.

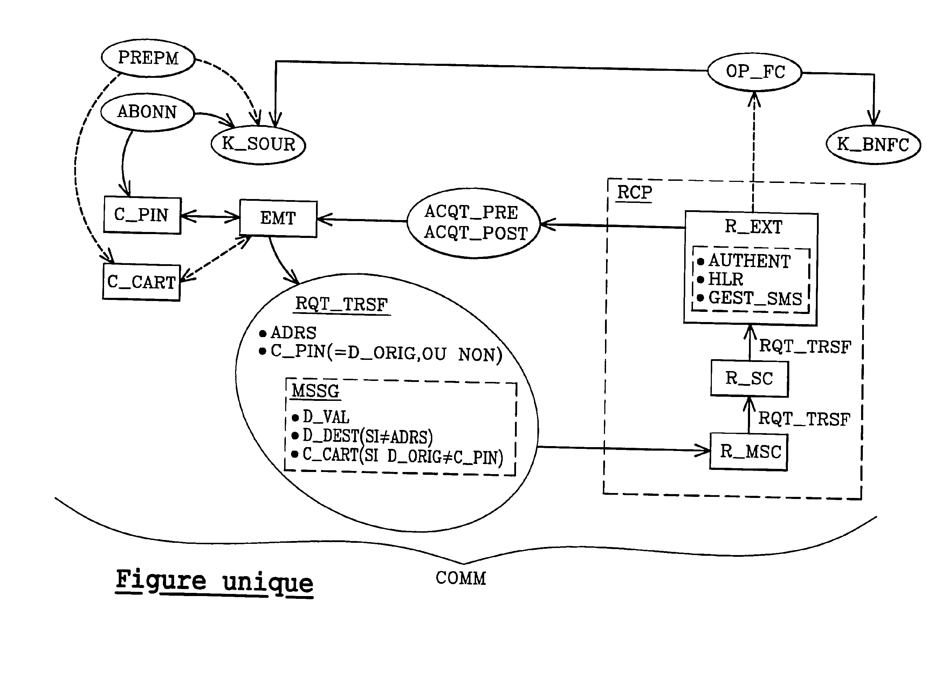

D'autres caractéristiques et avantages de l'invention ressortiront clairement de la description qui en est faite ci-après, à titre indicatif et nullement limitatif, en référence à l'unique figure annexée, qui représente de façon schématique et symbolique les principaux opérateurs et les principales opérations mis en oeuvre dans le système de l'invention, présenté dans une application à un transfert financier.

Comme annoncé précédemment, l'invention concerne un système permettant d'opérer, à travers un réseau de communication COMM, un transfert d'informations entre deux entités, en l'occurrence un transfert financier entre un compte source à débiter K_SOUR et un compte bénéficiaire à créditer K_BNFC.

Pour ce faire, le système comprend la transmission, par un terminal d'émission EMT du réseau COMM, d'une requête de transfert RQ_TRSF vers un récepteur RCP de ce même réseau.

La requête de transfert RQ_TRSF inclut au moins une donnée d'origine D_ORIG, une donnée de destination D_DEST, et une donnée de valeur D_VAL, la donnée d'origine identifiant la première entité, en l'occurrence le compte source K_SOUR, la donnée de destination D_DEST identifiant la seconde entité, en l'occurrence le compte bénéficiaire K_BNFC, et la donnée de valeur D_VAL identifiant un attribut du transfert, en l'occurrence le montant de ce transfert.

Dans le mode de réalisation préféré de l'invention, le réseau COMM est par exemple un réseau de téléphonie numérique, tel qu'un réseau GSM, un réseau UMTS, un réseau GPRS, ou un réseau fixe de téléphonie.

Pour mémoire, les références normatives des SMS sur réseau fixe sont : ETSI ES 201 986 v1.0.0 pour le service SMS, et ETSI ES 201 912 v1.1.1 pour le protocole véhiculant les SMS.

Selon l'invention, la donnée d'origine D_ORIG comprend un code, tel que C_PIN ou C_CART, qui permet d'identifier le compte source K_SOUR par l'intermédiaire d'une relation pré-établie, telle que ABONN ou PREPM, entre un opérateur du réseau de communication et l'expéditeur de la requête de transfert RQ_TRSF, c'est-à-dire l'utilisateur au moins occasionnel du terminal d'émission EMT.

En plus du code, tel que C_PIN ou C_CART, identifiant le compte source K_SOUR, et comme le montre la figure, la requête de transfert RQ_TRSF peut comprendre au moins une adresse ADRS et un message numérique MSSG.

L'adresse ADRS, qui est par exemple constituée d'un numéro de téléphone public ou privé, ou encore d'une adresse de courrier électronique, est composée à partir du terminal d'émission EMT et sert à identifier le récepteur RCP.

La valeur D_VAL du transfert est de préférence saisie en toutes lettres sur le terminal EMT pour réduire les risques d'erreur, et se trouve donc codée dans le message numérique sous forme de caractères alphabétiques.

La figure représente, au moyen de pointillés, et par le code C_CART, la possibilité que le code identifiant le compte source K_SOUR soit explicitement inclus dans le message numérique MSSG.

Ce code C_CART est par exemple constitué par le numéro d'une carte prépayée, c'est-à-dire d'une carte ayant fait, entre l'expéditeur de la requête de transfert RQ_TRSF et un opérateur du réseau COMM, l'objet d'une transaction de pré-paiement PREPM constituant la relation pré-établie précédemment évoquée.

Bien entendu, l'acceptation de la requête de transfert sera conditionnée par un attribut de validité du numéro C_CART de la carte prépayée.

Néanmoins, il est également possible de prévoir la possibilité que le code identifiant le compte source K_SOUR reste totalement implicite, comme le montre la figure en traits pleins avec l'exemple du code C_PIN.

Dans le cas du réseau GSM, ce code d'identification C_PIN peut être constitué par le code MSISDN du terminal d'émission EMT, par son code IMEI, ou par tout autre code préalablement agréé, enregistré et accepté par le réseau, tel qu'un identifiant de la norme "Bluetooth", ce code étant par exemple émis automatiquement sur le réseau par le terminal d'émission EMT.

Dans ce cas, le compte source K_SOUR peut être lié au code d'identification C_PIN par la transaction préalable d'abonnement notée ABONN, qui constitue la relation pré-établie précédemment évoquée.

Dans ces conditions, le réseau COMM est en mesure de traiter le code d'identification C_PIN, inclus dans la requête de transfert, à la fois en tant qu'identifiant du terminal d'émission EMT, et en tant que donnée d'origine D_ORIG, puisque le code C_PIN permet d'identifier le compte source K_SOUR par l'intermédiaire de la relation pré-établie ABONN.

Comme c'est le cas dans un réseau COMM de type GSM, le code d'identification C_PIN est avantageusement affecté d'un attribut de validité qui est connu du réseau COMM et qui dépend de la relation pré-établie, telle qu'un pré-paiement ou un abonnement, entre l'opérateur du réseau de communication COMM et l'expéditeur de la requête de transfert RQ_TRSF.

Dans ce cas, et dans l'exemple d'une relation pré-établie constituée par une transaction financière préalable, la requête de transfert RQ_TRSF est traitée par le réseau COMM en fonction de l'attribut de validité du code d'identification C_PIN pour accepter ou refuser le transfert financier requis.

Le message numérique MSSG, qui est libellé suivant un format prédéterminé, inclut au moins la donnée de valeur D_VAL et est de préférence constitué par un message court SMS dans le cas d' un réseau GSM.

Selon une variante possible de mise en oeuvre du système, le réseau COMM peut exploiter l'adresse ADRS comme un simple identifiant du récepteur RCP, auquel cas la donnée de destination D_DEST est par exemple intégrée au message numérique MSSG.

Cependant, selon une autre variante possible de mise en oeuvre du système, le réseau COMM peut traiter l'adresse ADRS à la fois en tant qu'identifiant du récepteur RCP et en tant que donnée de destination D_DEST.

Dans les deux cas, si le réseau COMM est du type GSM, le récepteur RCP de la requête de transfert RQ_TRSF au format SMS est constituée d'une chaîne de récepteurs successifs notés R_MSC, R_SC, et R_EXT, ce dernier constituant en l'occurrence le récepteur final.

Plus précisément, la chaîne de récepteurs successifs comprend au moins un commutateur R_MSC du réseau GSM, un serveur central R_SC de messages courts, et un serveur externe R_EXT.

Le commutateur R_MSC, appelé "MSC" dans la norme GSM (pour "Mobile-services Switching Center") a pour fonction, dans le système, de transmettre la requête de transfert RQ_TRSF au serveur central R_SC de messages courts, appelé SC dans la norme GSM (pour "Service Center").

Parmi d'autres fonctions qui lui sont assignées, le serveur central R_SC de messages courts assure la transmission de la requête de transfert RQ_TRSF au serveur externe R_EXT, ce serveur externe étant dédié, dans l'invention, au traitement de transferts financiers par messages courts SMS.

Dans le cadre de ses fonctions, le serveur externe R_EXT analyse le message numérique MSSG de la requête RQ_TRSF qui lui arrive, déclenche des opérations financières et comptables OP_FC en fonction au moins du contenu du message numérique MSSG et du code d'identification C_PIN, et commande l'émission, à destination du terminal d'émission EMT, d'un message ACQT_POST qui rend au moins compte des opérations autorisées et effectuées, ou non autorisées et non effectuées.

En réalité, le code d'identification C_PIN reçu par le serveur externe R_EXT peut être constitué par un code d'identification C_PIN1 obtenu par transcodage du code d'identification originel C_PIN pour garantir l'anonymat de l'expéditeur du message.

En variante, le code d'identification C_PIN peut être transcodé par le serveur externe R_EXT lui-même avant toute transmission vers le bénéficiaire.

Au lieu d'effectuer des transferts financiers actualisés, le système de l'invention peut aussi permettre d'effectuer des transferts financiers virtuels latents, c'est-à-dire des promesses de transferts financiers futurs.

Dans ce cas, le serveur externe R_EXT soumet le déclenchement des opérations financières et comptables à la réalisation d'au moins une condition supplémentaire, par exemple le fait que la date courante atteigne une date limite prédéterminée, qui transforme une promesse de transfert financier en un accord de transfert financier autorisant la réalisation de ce transfert.

Pour augmenter la sécurité du système et garantir l'identité de l'expéditeur et l'intégrité de la requête de transfert, le message MSSG peut inclure une signature électronique de cet expéditeur.

Comme indiqué précédemment, le système de l'invention est notamment bien adapté à l'envoi de dons à des associations caritatives et au rechargement du crédit d'un compte prépayé donnant accès au réseau de communication COMM.

Pour autant que le message MSSG puisse inclure une référence d'identification supplémentaire, ce système peut également permettre l'établissement d'autres transactions, par exemple le règlement, par l'opérateur du réseau et pour le compte de l'expéditeur de la requête, d'une facture identifiée au moins par son numéro dans le message MSSG.

Le système pourra être compris en plus grand détail par les exemples ci-après de sa mise en oeuvre dans un réseau GSM.

Initialement, l'utilisateur du terminal d'émission EMT, par exemple du type GSM, s'authentifie vis-à-vis de la carte SIM de ce terminal en saisissant avec succès son code PIN, ce terminal d'émission EMT étant dès lors en mesure d'émettre sur le réseau un code d'identification C_PIN par exemple constitué par son code MSISDN.

L'acronyme PIN dérive de l'expression anglo-saxonne "Personal Identity Number" et désigne un code secret défini par l'utilisateur et stocké sur la carte SIM d'un terminal GSM pour pouvoir accéder aux services du réseau GSM, l'acronyme SIM dérivant lui-même de l'expression anglo-saxonne "Subscriber Identity Module" et désignant le type auquel appartiennent les cartes électroniques qui contiennent toutes les informations d'abonnement d'un terminal GSM.

Puis cet utilisateur, désireux d'effectuer un transfert d'argent grâce à un message MSSG de type SMS, compose sur son terminal d'émission EMT le texte de son message en indiquant au moins le montant en toutes lettres du transfert, c'est-à-dire la donnée de valeur D_VAL.

Eventuellement, cet utilisateur peut compléter le texte du message MSSG par des informations légales supplémentaires requises pour ce genre d'opérations, à moins que ces informations n'aient été préalablement enregistrées.

Une fois le texte du message MSSG rédigé, l'utilisateur du terminal d'émission EMT envoie le message à une adresse ADRS, telle qu'un numéro de téléphone ou une adresse électronique, représentant le compte K_BNFC de l'organisation bénéficiaire à laquelle il souhaite transmettre l'argent.

Dans la variante où l'organisation bénéficiaire ne dispose d'aucune adresse spécifique permettant d'effectuer directement cette opération, l'utilisateur du terminal d'émission EMT indique dans le texte du message MSSG, en plus du montant D_VAL, l'information D_DEST permettant d'identifier le destinataire, après quoi ce message MSSG est envoyé à une adresse générique ADRS représentant le type de transaction requise (par exemple, don à une oeuvre de charité = 366, transfert à un compte prépayé = 368, etc.).

Dans tous les cas, la requête de transfert RQ_TRSF incluant le message MSSG est acheminée par le réseau de télécommunications COMM jusqu'à un récepteur RCP capable de recevoir et d'analyser les messages SMS grâce à la mise en oeuvre d'un logiciel GEST_SMS, et comprenant un serveur R_EXT spécialisé pour ce genre d'opérations. Ce récepteur, notamment doté d'un logiciel d'authentification AUTHENT, contrôle plusieurs paramètres du message SMS reçu (intégrité, authenticité, identification du terminal d'émission...), enregistre ce message, et réalise une lecture automatisée de son contenu.

Cette lecture permet au récepteur d'extraire au minimum le montant en toutes lettres du transfert, de convertir ce dernier en un nombre, et d'en déterminer la monnaie.

Si la conversion aboutit à un montant valide, ce montant est enregistré dans un journal avec le numéro de téléphone et les données d'authentification de l'expéditeur, la date, l'heure du message MSSG, et toutes autres informations nécessaires pour établir l'unicité de la transaction.

Les transactions ainsi stockées dans le serveur R_EXT sont traitées par des procédures automatisées qui dépendent de certains paramètres tels que le type de paiement (prépayé ou sur facture), le taux de risque associé au donateur, le montant (vérification de seuils), etc.

Une fois ces traitements réalisés, un message d'accusé de réception de type SMS est envoyé au terminal d'émission EMT, par exemple par le serveur spécialisé R_EXT, pour prévenir le créditeur de l'état de son transfert, ce message étant noté ACQT_PRE lorsqu'il est envoyé avant que les opérations financières et comptables OP_FC ne soient effectuées.

En plus de l'état de la transaction, ce message d'accusé de réception comportera toutes les données permettant d'identifier, de manière unique, le transfert ou la requête de transfert.

Le terminal d'émission EMT pourra lui-même stocker ce message d'accusé de réception pour l'établissement d'un historique ou à des fins de preuve.

En cas d'erreurs (adresse de l'organisation invalide, échec de la conversion en chiffres du montant du don en toutes lettres, monnaie non autorisée, contrôles négatifs de la transaction, etc.), un message SMS indiquant les raisons probables de l'échec de la transaction sera envoyé au terminal d'émission EMT par le serveur spécialisé R_EXT.

Seules les transactions valides donneront lieu à un reversement de l'opérateur à l'organisation réceptrice des transferts et au débit du montant du transfert sur le compte source K_SOUR.

Après le crédit effectif du compte bénéficiaire K_BNFC, un second message d'accusé de réception de type SMS est envoyé au terminal d'émission EMT, par exemple par le serveur spécialisé R_EXT, pour prévenir le créditeur du bon déroulement de son transfert, ce message étant noté ACQT_POST dans la mesure où il est envoyé après la réalisation des opérations financières et comptables OP_FC.

Les étapes du système dans le cas d'un don par message SMS (norme GSM) à une association caritative sont donc les suivantes (A1 à A7).

A1. Initialement, le donateur s'authentifie auprès de l'opérateur du réseau COMM en saisissant avec succès son code PIN sur son terminal d'émission EMT, en l'occurrence sur son terminal GSM, ce terminal étant conçu pour émettre automatiquement sur le réseau le code d'identification C_PIN, par exemple le code MSISDN.

A2. Le donateur compose alors un message MSSG de type SMS, dans lequel il spécifie le montant de son don en toutes lettres, par exemple « vingt-cinq euros ».

A3. Il envoie ensuite son message SMS à un numéro particulier ADRS (numéro E.164 ou numéro du plan privé), qui désigne le compte K_BNFC de l'association caritative à laquelle il souhaite transmettre son don, par exemple 26387 pour l'association des "Restos du Coeur".

A4. Le commutateur R_MSC constituant un commutateur MSC du réseau GSM transmet le message SMS jusqu'au serveur central R_SC, qui aiguille à son tour le message SMS, grâce au numéro ADRS et à une table de routage, vers le serveur externe R_EXT, spécialisé dans le traitement des dons par SMS.

A5. Le serveur externe R_EXT, qui raccordé au serveur central R_SC par un protocole spécifique lui permettant de recevoir et d'émettre comme un terminal du réseau GSM (par exemple l'un des protocoles connus sous les noms de SMPP ou de UCP), réceptionne le message SMS du donateur et enregistre la requête de versement de don.

A6. Le serveur externe R_EXT réalise alors, ou fait réaliser, les traitements indiqués plus haut, et notamment la lecture automatisée du contenu du message SMS et des contrôles, ces traitements pouvant inclure l'interrogation de bases de données, telles que l'enregistreur de localisation nominale (dénommé HLR dans la norme GSM), pour récupérer sur le donateur les informations conformes aux dispositions légales et aux contraintes de traçabilité de l'opérateur, et éventuellement nécessaires à l'établissement d'une requête de versement de don.

A7. A l'issue des traitements, le serveur R_EXT enregistre les transactions et leurs états dans un journal, et prévient ou fait prévenir le donateur, par un message SMS d'accusé de réception, du statut de sa requête de versement de don. Si le statut de la requête est favorable, le traitement de la requête de versement de don aura lieu dans les conditions définies par l'opérateur et lui permettant de gérer au mieux le risque d'impayé.

L'étape A2 pourrait aussi être réalisée grâce à une application préprogrammée, appelée "Simtoolkit", implantée par l'opérateur dans le terminal EMT, et accessible par l'intermédiaire d'un menu spécifique, par exemple intitulé « don à une association caritative ».

Ce programme pourrait simplifier la tâche du donateur en lui présentant par exemple une liste de noms d'associations et une liste de montants prédéfinis. Ces informations seraient ensuite automatiquement traduites en un montant en toutes lettres et en un numéro de destinataire correspondant à celui de l'association. Le nom et l'adresse du donateur pourraient si besoin être inclus automatiquement dans le texte du message SMS grâce à cette même application "Simtoolkit". Enfin, l'accès à ce menu spécifique pourrait éventuellement être protégé par un mot de passe.

Les étapes du système dans le cas d'un transfert d'argent entre deux comptes prépayés gérés par le même opérateur du réseau COMM sont par exemple les suivantes (B1 à B7).

B1. Initialement, le créditeur s'authentifie auprès de l'opérateur du réseau COMM en saisissant avec succès son code PIN sur son terminal d'émission EMT, en l'occurrence sur son terminal GSM, ce terminal étant conçu pour émettre automatiquement sur le réseau le code d'identification C_PIN, par exemple le code MSISDN.

B2. Le créditeur compose alors un message MSSG de type SMS, dans lequel il indique en toutes lettres le montant D_VAL du transfert, ainsi que le numéro D_DEST du destinataire.

B3. Il envoie ensuite son message SMS à un numéro ADRS particulier (par exemple: 87263), qui a vocation à recevoir toutes les requêtes de transfert d'argent.

B4. Le commutateur R_MSC du réseau GSM transmet la requête de transfert jusqu'au serveur central R_SC, qui aiguille à son tour le message SMS, grâce au numéro ADRS, vers le serveur externe R_EXT, spécialisé dans le traitement des transferts d'argent par message SMS.

B5. Le serveur externe R_EXT, qui est raccordé au serveur central R_SC par un protocole spécifique lui permettant de recevoir et d'émettre ses messages SMS, réceptionne le message SMS du créditeur et enregistre la requête de transfert.

B6. Le serveur R_EXT traite de manière automatisée la requête de transfert RQ_TRSF de la même manière que pour une requête de versement de don et extrait en outre le numéro D_DEST du destinataire du transfert. Le serveur R_EXT vérifie l'existence du destinataire dans l'enregistreur de localisation nominal HLR, récupère les caractéristiques du compte K_BNFC, et vérifie qu'il s'agit bien d'un compte prépayé.

B7. A l'issue de ces traitements, le serveur R_EXT enregistre les transactions et leurs états dans un journal et prévient le terminal d'émission EMT par message SMS du statut de sa requête de transfert. Si le statut de la requête est favorable, le transfert aura lieu dans les conditions définies par l'opérateur et lui permettant de gérer au mieux le risque d'impayé. A l'étape B2, un autre système pourrait être utilisé pour spécifier le compte du destinataire. Plus précisément, le numéro du destinataire pourrait être indiqué non pas dans le texte du message SMS, mais dans l'adresse de destination du message SMS. Par exemple, la requête de transfert RQ_TRSF pourrait être envoyée à « numéro du destinataire » + code, où le code accolé au numéro du destinataire servirait à identifier le type d'opérations à réaliser (en l'occurrence une opération du type « transfert »). De même que pour l'envoi de don, il est envisageable d'utiliser un logiciel d'application téléchargé dans la carte SIM pour faciliter la saisie du message SMS (rajout automatique du code de l'opération au numéro du destinataire choisi dans l'annuaire...). L'accès à cette application pourra éventuellement être protégé par un mot de passe.

Le système de l'invention offre un grand nombre d'avantages et de possibilités.

En particulier, dans le cas de dons à des associations caritatives, l'envoi d'argent peut être contrôlé en prévoyant que le montant de l'envoi ne dépasse jamais les possibilités du donateur, le montant cessible étant limité au montant contenu dans le compte client K_SOUR du terminal d'émission.

Dans le cas d'un compte basé sur un abonnement, trois possibilités existent (C1 à C3):
C1. Le reversement du don à l'association caritative par l'opérateur se fait de façon différée : il ne s'effectue qu'après le règlement perçu de la facture téléphonique portant le montant du don. Un solde non négatif du compte de l'abonné, relativement à la période pendant laquelle le versement du don a été requis, déclenche le paiement par l'opérateur de ce don à l'association caritative, et l'émission, après réception du don par l'association caritative, d'un message de remerciement du bénéficiaire au donateur.
C2. Le serveur R_EXT, à réception du message SMS contenant le don, consulte le compte client K_SOUR du terminal d'émission EMT du message SMS. Si le montant du don est en accord avec le risque que l'opérateur accepte de prendre avec ce client, le montant du don, retranché éventuellement des frais d'intermédiation négociés entre l'opérateur et l'association caritative, est immédiatement versé par l'opérateur sur le compte de l'association caritative. Si le montant est trop élevé par rapport au risque encouru, un message SMS de retour, envoyé par le serveur R_EXT, avertit le terminal d'émission EMT du message SMS que la transaction n'a pu avoir lieu, et l'invite alors à ne pas dépasser une certaine somme. L'association caritative, à réception du don, envoie un message SMS de remerciement.
C3. Le paiement du don à l'association caritative est effectué à réception du message SMS par le serveur R_EXT, et l'association caritative envoie un message SMS de remerciement.

Dans le cas où le paiement du don n'est pas différé, l'opérateur avance de l'argent à l'association caritative en prenant un certain risque. Un taux d'intérêt couvrant le coût de l'avance et du risque encouru peut être envisagé : ainsi l'opérateur, comme un service bancaire ou une société de crédit (cartes bancaires, sociétés de prêts...) prélèvera un pourcentage (3%, 4%, 6%...) sur le montant du don.

Dans tous les cas, des frais d'intermédiation pourront être facturés par l'opérateur à l'association caritative. Ces frais peuvent être soit retenus à la source par l'opérateur à chaque transaction réussie de don par message SMS, soit payés ultérieurement, de façon groupée, par l'association caritative à la réception de son bilan des dons par messages SMS dont elle aura bénéficié à l'intérieur d'une période prédéterminée.

Cette dernière option offre l'avantage d'ouvrir la possibilité de négociations entre l'opérateur et l'association caritative, et est probablement moins onéreuse pour les deux parties. On peut aussi imaginer que le terminal d'émission EMT de messages SMS paye à l'avance à l'opérateur un certain montant en le dédiant à l'envoi de messages SMS à des fins charitables. L'opérateur puisera alors uniquement dans ce compte prépayé et géré par lui en interdisant au solde de ce compte de devenir négatif. Le contrôle de la gestion de ce compte induira pour le donateur un contrôle naturel de ses dépenses pour les bonnes oeuvres.

Dans le cas d'un compte prépayé (au moyen d'une carte telle qu'une carte "Mobicarte" par exemple), deux cas (D1 et D2) se présentent :
D1. Soit l'utilisateur du terminal d'émission EMT dispose du crédit nécessaire au transfert qu'il requiert. Dans ce cas, l'ordre de paiement est effectué et le compte prépayé se trouve amputé du montant du don, augmenté du coût en vigueur d'une communication SMS (à moins qu'une telle communication, à caractère charitable, ne soit prise en charge par l'opérateur ou l'association caritative, auquel cas elle sera gratuite pour le terminal d'émission du message SMS), et éventuellement amputé du montant des frais d'intermédiation négociés au préalable entre l'opérateur et l'association caritative.
D2. Soit le compte prépayé présente un montant insuffisant. Dans ce cas, trois sous-possibilités (D2.1, D2.2, et D2.3) apparaissent :
   D2.1. Soit rien ne se passe, c'est-à-dire qu'aucun versement n'est effectué à l'association caritative; un message SMS de retour est alors adressé à l'expéditeur du message SMS pour l'informer de la situation.
   D2.2. Soit tout le solde du compte prépayé, moins une réserve d'un euro par exemple pour permettre à l'expéditeur d'utiliser encore son terminal EMT, est versé à l'association caritative. Un message SMS de l'opérateur, facturé à l'expéditeur, le prévient du montant adressé à l'association caritative et du solde de son compte prépayé.
   D2.3. Soit enfin l'opérateur craint une erreur de l'expéditeur du don et refuse tout paiement à l'association caritative. Dans ce cas l'opérateur adresse à l'expéditeur un message SMS de non-paiement, lui indiquant le montant de son crédit sur son compte prépayé et lui demandant de ré-effectuer son don en fonction du montant disponible sur son compte. Ce message SMS de l'opérateur sera a priori facturé à l'expéditeur du message SMS.

Toutes les opérations de solvabilité sont effectuées automatiquement par le serveur traitant.

Il sera avantageux, pour l'association caritative, que le nom du propriétaire du terminal d'émission EMT envoyant ce type de message SMS, soit automatiquement écrit, avec son adresse, dans le texte du message SMS (par exemple sous la forme : « Jean MARTIN, 1 Rue Descartes, 75017, Paris, montant : » (soit 55 caractères), suivi du montant saisi en toutes lettres (dans ce cas, au plus 65 caractères environ). Cet ajout, bien qu'optionnel en prévision du cas où le donateur souhaiterait rester anonyme, permettra, dans tous les autres cas, l'envoi annuel nominal d'un récapitulatif des dons que le donateur aura adressés à l'association caritative.

Afin d'économiser le nombre de caractères utilisés dans le message SMS, il pourra être avantageux d'envoyer automatiquement, à la place du nom et de l'adresse, un identifiant plus concis du terminal d'émission EMT, par exemple son identifiant selon la norme "Bluetooth". La possibilité sera alors offerte à l'association caritative de découvrir toutes les informations relatives au donateur (nom, adresse postale, adresse électronique, etc.) sur une base de données appropriée.

Dans tous les cas, la vérification et la validation du transfert effectif d'argent seront établies par les événements et documents suivants :
- Envoi au donateur, par l'association caritative, d'un message SMS indiquant la bonne réception du don ;
- Envoi au donateur, par l'opérateur, d'un bilan annuel sur papier, à usage fiscal possible, pour lister tous les dons effectués, avec les montants des dons tels que renseignés sur les messages SMS, les dates, numéros d'appel et noms des associations caritatives bénéficiaires ;
- Envoi par l'association caritative au terminal d'émission de messages SMS d'un bilan annuel papier de tous les dons effectués à son bénéfice ;
- Envoi aux abonnés, dans leur facture mensuelle ou bimensuelle, de la liste de tous les dons effectués pendant la période considérée et réclamés pour paiement. La liste de ces dons, clairement identifiée dans la facture, sera ainsi facilement contrôlable ; et
- Envoi par l'opérateur à l'association caritative d'une facture indiquant les frais retenus pour réaliser le service de dons par messages SMS.

Dans tous les cas, l'association caritative, si elle dispose du numéro d'appel du donateur, pourra relancer le donateur par message SMS quand elle le souhaitera, et créer ainsi un nouveau mode d'échanges, par message SMS, d'informations et de demandes de soutien (par exemplc « nous vous sollicitons aujourd'hui pour les victimes du tremblement de terre du 05/01/02 » ou « A l'aide ! Votre soutien nous est précieux. Pensez à nous ! »).

Dans tous les cas, le principe exposé pourra être réutilisé pour enregistrer des promesses de dons par messages SMS, utilisées dans des opérations du type "Téléthon". Un numéro d'appel spécifique sera utilisé pour recevoir les promesses de dons.

Dans le cas de rechargements de comptes de téléphones mobiles, tout se passe, pour le terminal d'émission du message SMS, comme ci-dessus sauf sur les points suivants :
- Financièrement et juridiquement, il ne s'agit plus nécessairement d'un don ;
- Au lieu de comporter uniquement le montant du transfert et les coordonnées du terminal d'émission, le message SMS doit également incorporer le numéro d'appel du bénéficiaire de ce transfert ;
- Au lieu d'utiliser le numéro d'appel du bénéficiaire, le message SMS sera adressé à un numéro d'appel générique particulier, fourni par l'opérateur. La composition de ce numéro déclenchera d'une part l'autorisation de lecture du message SMS par l'opérateur, et d'autre part le lancement du programme de recherche du montant à verser et du numéro du compte bénéficiaire ;
- Enfin, le relevé pour les services fiscaux n'a plus de raison d'être et ne sera donc pas effectué.

Dans le cas de l'utilisation d'un compte prépayé ou d'un abonnement comme porte-monnaie électronique (PME), le même système peut être utilisé sous réserve d'un renforcement des contraintes de sécurité et d'un plafonnement des montants.

## Revendications

1. Système pour opérer un transfert d'informations entre des première et seconde entités (K_SOUR, K_BNFC), ce système comprenant une transmission, depuis un terminal d'émission (EMT) appartenant à un réseau de communication (COMM) et vers un récepteur (RCP) de ce même réseau de communication, d'une requête de transfert (RQ_TRSF) incluant au moins une donnée d'origine (D_ORIG) identifiant la première entité (K_SOUR), une donnée de destination (D_DEST) identifiant la seconde entité (K_BNFC), et une donnée de valeur (D_VAL) identifiant un attribut du transfert, **caractérisé en ce que** la donnée d'origine (D_ORIG) comprend un code (C_PIN, C_CART) identifiant la première entité (K_SOUR) par l'intermédiaire d'une relation pré-établie (ABONN, PREPM) entre un opérateur du réseau et un expéditeur de la requête de transfert (RQ_TRSF).

2. Système suivant la revendication 1, **caractérisé en ce que** le réseau (COMM) utilisé est un réseau de téléphonie numérique, et **en ce que** la requête de transfert (RQ_TRSF) comprend au moins, en plus du code (C_PIN, C_CART) identifiant la première entité (K_SOUR), une adresse (ADRS), telle qu'un numéro de téléphone, composée par le terminal d'émission (EMT) et identifiant le récepteur (RCP), et un message numérique (MSSG) libellé suivant un format prédéterminé et incluant au moins la donnée de valeur (D_VAL).

3. Système suivant la revendication 2, **caractérisé en ce que** le code (C_CART) identifiant la première entité (K_SOUR) est inclus dans le message numérique (MSSG).

4. Système suivant la revendication 1 ou 2, **caractérisé en ce que** le terminal d'émission (EMT) est identifié dans le réseau (COMM) par un code d'identification (C_PIN) qui lui est propre, **en ce que** la première entité (K_SOUR) est liée au code d'identification (C_PIN) par ladite relation pré-établie (ABONN), et **en ce que** ce code d'identification (C_PIN) est traité par le réseau (COMM) à la fois en tant qu'identifiant du terminal d'émission (EMT) et en tant que donnée d'origine (D_ORIG) identifiant la première entité (K_SOUR) par l'intermédiaire de ladite relation pré-établie (ABONN).

5. Système suivant l'une quelconque des revendications précédentes, **caractérisé en ce que** le code (C_PIN, C_CART) identifiant la première entité (K_SOUR) est affecté d'un attribut de validité connu du réseau (COMM) et dépendant de la relation pré-établie entre l'opérateur du réseau de communication et l'expéditeur de la requête de transfert (RQ_TRSF), et **en ce que** la requête de transfert (RQ_TRSF) est traitée par le réseau en fonction de l'attribut de validité de ce code (C_PIN, C_CART).

6. Système suivant l'une quelconque des revendications précédentes combinée à la revendication 2, **caractérisé en ce que** la donnée de valeur (D_VAL) est codée dans le message numérique (MSSG) sous forme de caractères alphabétiques.

7. Système suivant l'une quelconque des revendications précédentes combinée à la revendication 2, **caractérisé en ce que** le réseau utilisé est un réseau GSM, et **en ce que** le message numérique (MSSG) est constitué par un message court de service SMS.

8. Système suivant l'une quelconque des revendications précédentes combinée à la revendication 2, **caractérisé en ce que** l'adresse (ADRS) est traitée par le réseau (COMM) à la fois en tant qu'identifiant du récepteur (RCP) et en tant que donnée de destination (D_DEST).

9. Système suivant l'une quelconque des revendications 1 à 7 combinée à la revendication 2, **caractérisé en ce que** l'adresse (ADRS) est traitée par le réseau (COMM) en tant qu'identifiant du récepteur (RCP), et **en ce que** le message numérique (MSSG) inclut la donnée de destination (D_DEST).

10. Système suivant l'une quelconque des revendications 8 et 9 combinée à la revendication 7, **caractérisé en ce que** le récepteur (RCP) du message (MSSG) au format SMS est constituée d'une chaîne de récepteurs successifs (R_MSC, R_SC, R_EXT) aboutissant à un récepteur final (R_EXT), cette chaîne de récepteurs successifs comprenant au moins un commutateur (R_MSC) du réseau GSM, un serveur central (R_SC) de messages courts auquel la requête de transfert (RQ_TRSF) est transmise par ce commutateur (R_MSC), et un serveur externe (R_EXT) spécialisé dans le traitement de transferts par messages courts SMS, vers lequel la requête de transfert (RQ_TRSF) est aiguillée par le serveur central (R_SC) de messages courts.

11. Système suivant la revendication 10, **caractérisé en ce que** le serveur externe (R_EXT) analyse le message numérique (MSSG), déclenche des opérations (OP_FC) liées au transfert et dépendant au moins du contenu du message numérique (MSSG) et du code d'identification (C_PIN), et commande l'émission, à destination du terminal d'émission (EMT), d'un message (ACQT_POST) rendant au moins compte des opérations effectuées ou non effectuées.

12. Système suivant la revendication 11, **caractérisé en ce que** le serveur externe (R_EXT) soumet le déclenchement des opérations liées au transfert à la réalisation d'au moins une condition supplémentaire transformant une promesse de transfert en un accord de transfert.

13. Système suivant l'une quelconque des revendications précédentes combinée à la revendication 4, **caractérisé en ce que** le code d'identification (C_PIN) est constitué par un code de type MSISDN, par un code de type IMEI, ou par un code d'identification "Bluetooth".

14. Système suivant l'une quelconque des revendications précédentes combinée à la revendication 4, **caractérisé en ce qu'**au moins le code d'identification (C_PIN) subit un transcodage par le réseau de communication (COMM).

15. Système suivant l'une quelconque des revendications précédentes combinée à la revendication 2, **caractérisé en ce que** le message (MSSG) inclut une signature électronique identifiant l'expéditeur de la requête de transfert (RQ_TRSF).

16. Système suivant l'une quelconque des revendications précédentes combinée à la revendication 2, **caractérisé en ce que** le message (MSSG) inclut une référence d'identification supplémentaire, telle qu'un numéro de facture.

17. Application d'un système suivant l'une quelconque des revendications précédentes à l'envoi de dons à des associations caritatives.

18. Application d'un système suivant l'une quelconque des revendications 1 à 16 au rechargement du crédit d'un compte prépayé.
